# EUROPEAN PATENT APPLICATION

(11) **EP 4 379 900 A1**
(43) Date of publication of application: **05.06.2024**
(21) Application number: 22849067.8
(22) Date of filing: 21.06.2022
(51) Int. Cl.: H01M 10/38, H01M 4/38, H01M 4/40, H01M 4/485, H01M 4/505, H01M 4/525, H01M 4/587, H01M 10/36, H01M 50/417, H01M 50/42, H01M 50/426, H01M 50/446

(54) **LITHIUM ION SECONDARY BATTERY**

(30) Priority: 29.07.2021 JP 2021124562
(71) Applicant: Panasonic Intellectual Property Management Co., Ltd., Osaka-shi, Osaka 540-6207 (JP)
(72) Inventor: IIDA, Kazuhiro, Kadoma-shi, Osaka 571-0057 (JP); TAKEZAWA, Hideharu, Kadoma-shi, Osaka 571-0057 (JP)
(74) Representative: Novagraaf International SA
(86) International application number: PCT/JP2022/024730
(87) International publication number: WO 2023/007991

(57) **Abstract**

This lithium ion secondary battery (1) has a negative electrode (12), a positive electrode (10), an aqueous electrolyte (16) containing a lithium salt, and a separation layer (14) arranged between the negative electrode (12) and the positive electrode (10). The aqueous electrolyte (16) is in contact with the positive electrode (10), and the separation layer (14) includes a non-aqueous solid electrolyte A in which a matrix polymer, the lithium salt and a hydrophobic ionic liquid are compounded.

## Description

### TECHNICAL FIELD

The present disclosure relates to a lithium ion secondary battery.

### BACKGROUND

As secondary batteries with a high output and a high energy density, lithium ion secondary batteries that include a positive electrode, a negative electrode, and an electrolyte liquid and perform charge and discharge by allowing lithium ions to travel between the positive electrode and the negative electrode are widely used. In the conventional secondary batteries, an organic solvent-based electrolyte liquid is used for achieving the high energy density.

However, organic solvents are generally flammable, and have an important problem of ensuring safety. In addition, organic solvents have a lower ion conductivity than aqueous solutions, and have a problem that the rapid charge-discharge characteristics are insufficient.

In view of such problems, a secondary battery has been studied in which an aqueous electrolyte containing water is used (see, for example, Patent Literature 1 to 4). For example, Patent Literature 1 proposes a lithium ion secondary battery in which an aqueous solution containing a high-concentration alkali salt is used as an aqueous liquid electrolyte. Patent Literature 2 proposes a lithium ion secondary battery including a negative electrode filled with a non-aqueous solid electrolyte, a positive electrode, a separator disposed between the negative electrode and the positive electrode and filled with a non-aqueous solid electrolyte, and an aqueous liquid electrolyte.

Non Patent Literature 1 discloses a method of producing a non-porous membrane of a solid electrolyte with a phase inversion method using a poor solvent.

### CITATION LIST

### PATENT LITERATURE

Patent Literature 1: JP 6423453 B
Patent Literature 2: JP 2018-198131 A
Patent Literature 3: JP 2018-156895 A
Patent Literature 4: JP 2018-156837 A

### NON PATENT LITERATURE

Non Patent Literature 1: Electrochimica Acta 49, (2004), 3339-3345

### SUMMARY

### TECHNICAL PROBLEM

An object of the present disclosure is to improve an initial discharge capacity in a lithium ion secondary battery using an aqueous electrolyte.

### SOLUTION TO PROBLEM

An aspect of the present disclosure is a lithium ion secondary battery including: a negative electrode; a positive electrode; an aqueous electrolyte containing a lithium salt; and a partition layer disposed between the negative electrode and the positive electrode, in which the aqueous electrolyte is in contact with only the positive electrode out of the negative electrode and the positive electrode, and the partition layer contains a non-aqueous solid electrolyte A in which a matrix polymer, a lithium salt, and a hydrophobic ionic liquid are combined.

### ADVANTAGEOUS EFFECTS OF INVENTION

According to the present disclosure, in a lithium ion secondary battery using an aqueous electrolyte, an initial discharge capacity can be improved.

### BRIEF DESCRIPTION OF DRAWINGS

FIG. 1 is a schematic sectional view showing an example of a lithium ion secondary battery of the present embodiment.
FIG. 2 is a schematic sectional view showing another example of the lithium ion secondary battery of the present embodiment.

### DESCRIPTION OF EMBODIMENTS

A lithium ion secondary battery of an aspect of the present disclosure includes a negative electrode; a positive electrode; an aqueous electrolyte containing a lithium salt; and a partition layer disposed between the negative electrode and the positive electrode, in which the aqueous electrolyte is in contact with only the positive electrode out of the negative electrode and the positive electrode, and the partition layer contains a non-aqueous solid electrolyte A in which a matrix polymer, a lithium salt, and a hydrophobic ionic liquid are combined. By using the lithium ion secondary battery according to the aspect of the present disclosure, the initial discharge capacity can be improved. Although the mechanism of exerting the effect is not sufficiently clear, the following is presumed.

Bringing the aqueous electrolyte into contact with only the positive electrode suppresses a side reaction of water at the negative electrode and thus a charge-discharge reaction can proceed. However, when moisture in the aqueous electrolyte on the positive electrode side moves to the negative electrode side through the partition layer between the positive electrode and the negative electrode, a side reaction of water occurs, and the discharge capacity decreases. However, as in the present disclosure, by using the partition layer containing the non-aqueous solid electrolyte A in which a matrix polymer, a lithium salt, and a hydrophobic ionic liquid are combined, the movement of moisture in the aqueous electrolyte on the positive electrode side to the negative electrode side is suppressed, so that the side reaction of water is suppressed, and the initial discharge capacity can be improved.

Hereinafter, an example of an embodiment of the lithium ion secondary battery according to the present disclosure will be described in detail.

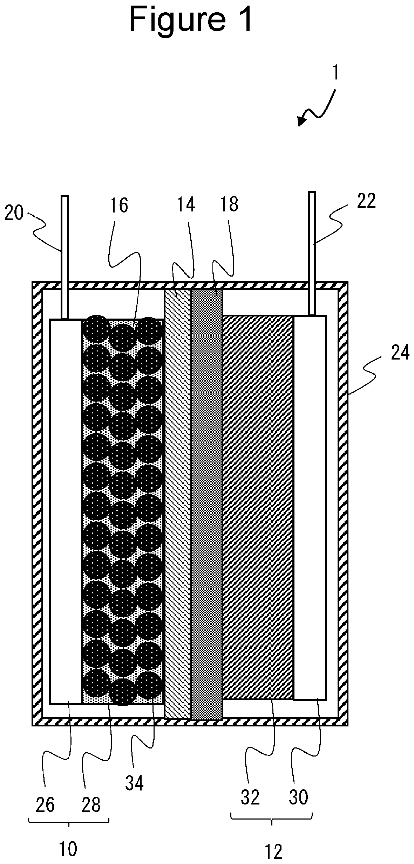

FIG. 1 is a schematic sectional view showing an example of the lithium ion secondary battery of the present embodiment. A lithium ion secondary battery 1 shown in FIG. 1 includes a positive electrode 10, a negative electrode 12, a partition layer 14, an aqueous electrolyte 16, a separator 18 containing a non-aqueous electrolyte, a positive electrode lead 20, a negative electrode lead 22, and a battery case 24 housing these components.

The positive electrode 10 includes a positive electrode current collector 26 and a positive electrode mixture layer 28 disposed on the positive electrode current collector 26. A positive electrode lead 20 is connected to the positive electrode current collector 26. The positive electrode lead 20 is housed in the battery case 24 so that a tip of the positive electrode lead 20 protrudes to the outside of the battery case 24.

The negative electrode 12 includes a negative electrode current collector 30 and a negative electrode mixture layer 32 disposed on the negative electrode current collector 30. A negative electrode lead 22 is connected to the negative electrode current collector 30. The negative electrode lead 22 is housed in the battery case 24 so that the tip of the negative electrode lead 22 protrudes to the outside of the battery case 24.

For example, the aqueous electrolyte 16 is impregnated in the positive electrode mixture layer 28, and is in contact with only the positive electrode 10 out of the positive electrode 10 and the negative electrode 12.

The partition layer 14 is disposed between the positive electrode 11 and the negative electrode 12. The partition layer 14 may be wound around the negative electrode 12.

The separator 18 containing a non-aqueous electrolyte is disposed between the partition layer 14 and the negative electrode 12. That is, the non-aqueous electrolyte is disposed between the partition layer 14 and the negative electrode 12, and is in contact with the negative electrode mixture layer 32 of the negative electrode 12. When a non-carbon material such as a metal such as Si, Sn or Li, a Li-containing alloy, or a Li-containing metal oxide is used as the negative electrode active material constituting the negative electrode mixture layer 32, the separator 18 containing a non-aqueous electrolyte may not be provided. However, when a carbon material is used as the negative electrode active material, it is preferable to provide the separator 18 containing a non-aqueous electrolyte in order to advance the charge-discharge reaction. In addition, the negative electrode mixture layer 32 may be coated with the non-aqueous electrolyte in a gel state or a solid state, or the negative electrode mixture layer 32 may be impregnated with the non-aqueous electrolyte in a liquid state. In these cases, the separator 18 is not necessarily provided.

### <Positive Electrode 10>

As the positive electrode current collector 26, for example, a foil of a metal electrochemically and chemically stable within the potential range of the positive electrode 10 or a film having such a metal disposed on its surface layer can be used. The form of the positive electrode current collector 26 is not particularly limited. For example, a porous body of the metal, such as a mesh, a punching sheet, or an expanded metal, may be used. Examples of a material of the positive electrode current collector 26 include stainless steel, Al, an aluminum alloy, and Ti. The positive electrode current collector 26 preferably has a thickness of, for example, greater than or equal to 3 µm and less than or equal to 50 µm from the viewpoints of current collectability, mechanical strength, and the like.

The positive electrode mixture layer 28 includes a positive electrode active material 34. The positive electrode mixture layer 28 may include a binder, a conductive agent, and the like. The positive electrode 10 can be manufactured by, for example, applying a positive electrode mixture slurry containing a positive electrode active material 34, a binder, a conductive agent, and the like to the positive electrode current collector 26, and drying and rolling the applied film to form the positive electrode mixture layer 28 on the positive electrode current collector 26.

Examples of the positive electrode active material 34 include lithium-containing transition metal oxides containing lithium (Li) and a transition metal element such as cobalt (Co), manganese (Mn), or nickel (Ni). In addition, examples of the positive electrode active material 34 include transition metal sulfides, metal oxides, lithium-containing polyanion-based compounds containing one or more transition metals such as lithium iron phosphate (LiFePO₄) and lithium iron pyrophosphate (Li₂FeP₂O₇), a sulfur-based compound (Li₂S), oxygen, and oxygen-containing metal salts such as lithium oxide.

The lithium-containing transition metal oxide preferably contains at least any one element of Ni, Co, Mn, or aluminum (Al), for example, from the viewpoints of charge-discharge efficiency and the like. Among these elements, at least a Ni element, at least a Co element, at least two elements of Ni and Mn, at least three elements of Ni, Co, and Mn, or at least three elements of Ni, Co, and Al are preferably contained. The lithium-containing transition metal oxide may contain an additional element other than these elements, and for example, may contain zirconium (Zr), boron (B), magnesium (Mg), scandium (Sc), yttrium (Y), titanium (Ti), iron (Fe), copper (Cu), zinc (Zn), chromium (Cr), lead (Pb), tin (Sn), sodium (Na), potassium (K), barium (Ba), strontium (Sr), calcium (Ca), tungsten (W), molybdenum (Mo), niobium (Nb), and silicon (Si).

Specific examples of the lithium-containing transition metal oxide include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (in each chemical formula, M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). The lithium-containing transition metal oxides may be used singly or in combination of two or more kinds thereof. The lithium-containing transition metal oxide preferably contains 80 mol% or more of Ni based on the total amount of the transition metals other than lithium from the viewpoint of increasing the capacity. From the viewpoint of stability of the crystal structure, the lithium-containing transition metal oxide is more preferably LiₐNi_{b}Co_{c}Al_{d}O₂ (0 < a ≤ 1.2, 0.8 ≤ b < 1, 0 < c < 0.2, 0 < d ≤ 0.1, and b + c + d = 1).

The lithium-containing transition metal oxide may be a Li-rich transition metal oxide, a lithium-containing transition metal halogen oxide, or the like. The Li-rich transition metal oxide is represented by, for example, the general formula Li₁₊ₓMe₁₋ₓO₂ (0 < x) (Me represents a metal element such as a transition metal element). The lithium-containing transition metal halogen oxide is not particularly limited as long as it is a lithium-containing transition metal oxide containing a halogen atom, but a lithium-containing transition metal oxide containing a fluorine atom is preferably included, for example, from the viewpoints of structural stability of the lithium-containing transition metal oxide, and the like.

As the conductive agent, a known conductive agent that enhances the electrical conductivity of the positive electrode mixture layer 28 can be used, and examples of the conductive agent include carbon materials such as carbon black, acetylene black, Ketjenblack, graphite, carbon nanofibers, carbon nanotubes, and graphene. As the binder, a known binder that maintains good contact states of the positive electrode active material 34 and the conductive agent and enhances the adhesiveness of the positive electrode active material 34 and the like to the surface of the positive electrode current collector 26 can be used, and examples of the binder include fluoro resins such as polytetrafluoroethylene (PTFE) and polyvinylidene fluoride (PVDF), polyacrylonitrile (PAN), polyimides, acrylic resins, polyolefins, carboxymethyl celluloses (CMCs) and salts thereof, styrene-butadiene rubber (SBR), polyethylene oxide (PEO), polyvinyl alcohol (PVA), and polyvinylpyrrolidone (PVP).

### <Negative Electrode 12>

As the negative electrode current collector 30, for example, a foil of a metal electrochemically and chemically stable within the potential range of the negative electrode 12 or a film having such a metal disposed on its surface layer can be used. The form of the negative electrode current collector 30 is not particularly limited. For example, a porous body of the metal, such as a mesh, a punching sheet, or an expanded metal, may be used. Examples of a material of the negative electrode current collector 30 include Al, Ti, Mg, Zn, Pb, Sn, Zr, In, Cu, and the like. These metals may be used singly, or may be used as an alloy or the like of two or more kinds thereof, and the material of the negative electrode current collector 30 only needs to include at least one such metal as a main component. In the case of including two or more elements, the material is not necessarily required to be alloyed. The negative electrode current collector 30 preferably has a thickness of, for example, greater than or equal to 3 µm and less than or equal to 50 µm from the viewpoints of current collectability, mechanical strength, and the like.

The negative electrode mixture layer 32 includes a negative electrode active material. The negative electrode mixture layer 32 may include a binder, a conductive agent, a thickener, and the like. As the conductive agent and the binder, ones similar to those on the positive electrode 10 side can be used. The negative electrode 12 can be manufactured by, for example, applying a negative electrode mixture slurry containing a negative electrode active material, a binder, a conductive agent, and the like to the negative electrode current collector 30, and drying and rolling the applied film to form the negative electrode mixture layer 32 on the negative electrode current collector 30.

Examples of the thickener include cellulose derivatives (for example, cellulose ethers) such as carboxymethyl celluloses (CMCs), modified products thereof (including salts such as Na salts), and methyl cellulose, saponified products of a polymer having a vinyl acetate unit such as polyvinyl alcohol, and polyethers (for example, polyalkylene oxides such as polyethylene oxide). These may be used singly or in combination of two or more kinds thereof.

The negative electrode active material is not particularly limited as long as it is a material that can be used as a negative electrode active material of a conventional lithium ion secondary battery, and examples of the material include carbon materials such as artificial graphite, natural graphite, hard carbon, soft carbon, carbon nanotubes, and activated carbon, and non-carbon materials such as metals such as Si, Sn, and Li, alloys of such metals, and metal compounds such as metal oxides, metal sulfides, and metal nitrides. Examples of the alloys include Li-containing alloys such as a lithium-aluminum alloy, a lithium-tin alloy, a lithium-lead alloy, and a lithium-silicon alloy. Examples of the metal oxides include Li-containing metal oxides such as a lithium titanate (such as Li₄Ti₅O₁₂). Examples of the metal nitrides include Li-containing nitrides such as lithium-cobalt nitrides, lithium-iron nitrides, and lithium-manganese nitrides. Sulfur-based compounds may also be exemplified.

When a metal or an alloy of Si, Sn, Li or the like is used as the negative electrode active material because the metal or the alloy of Si, Sn, Li or the like has high electrical conductivity and is easily molded into a plate shape, the negative electrode 12 formed of the negative electrode active material layer 32 obtained by molding a metal or an alloy of Si, Sn, Li or the like into a plate shape may be used without providing the negative electrode current collector 30.

### <Aqueous Electrolyte 16>

The aqueous electrolyte 16 contains a lithium salt. The aqueous electrolyte 16 containing a lithium salt is, for example, an aqueous liquid electrolyte containing a lithium salt and an aqueous solvent, or an aqueous solid electrolyte in which a lithium salt, an aqueous solvent, and a matrix polymer are combined. The aqueous solid electrolyte is obtained by, for example, dissolving the lithium salt in the aqueous solvent, further mixing or dissolving the matrix polymer to obtain a precursor solution, and drying the precursor solution. The aqueous electrolyte 16 may be a liquid or solid, and is preferably an aqueous liquid electrolyte from the viewpoint of further improving the battery characteristics.

The aqueous solvent is a solvent containing water, and may be water alone, or may contain water and a solvent other than water. The content of water based on the total amount of the aqueous solvent is preferably greater than or equal to 50% in terms of volume ratio, for example, from the viewpoints of enhancing the safety of the lithium ion secondary battery 1, and the like.

The amount of water with respect to the lithium salt contained in the aqueous electrolyte 16 is such that the molar ratio of the lithium salt to water is preferably less than or equal to 1 : 4, more preferably in the range of greater than or equal to 1 : 0.5 and less than or equal to 1 : 4, and still more preferably in the range of greater than or equal to 1 : 0.5 and less than or equal to 1 : 3 mol. In a case where the amount of water with respect to the lithium salt contained in the aqueous electrolyte 16 is within the above range, for example, the potential window of the aqueous electrolyte 16 may be enlarged as compared with the case of the water amount out of the above range, and thus the voltage applied to the lithium ion secondary battery 1 may be further increased.

Examples of the solvent other than water contained in the aqueous solvent include organic solvents such as esters, ethers, nitriles, alcohols, ketones, amines, amides, sulfur compounds, and hydrocarbons. In addition, a halogen-substituted product obtained by substituting at least a part of hydrogen in these solvents with a halogen atom such as fluorine may be used. Specifically, from the viewpoint of, for example, improving the battery characteristics of the lithium ion secondary battery 1, the solvent other than water is preferably, for example, a cyclic carbonic acid ester such as ethylene carbonate, propylene carbonate, vinylidene carbonate, or butylene carbonate, a chain carbonic acid ester such as dimethyl carbonate, methyl ethyl carbonate, or diethyl carbonate, or a fluorinated carbonic acid ester including fluorine as a constitution element such as fluoroethylene carbonate, fluorodimethyl carbonate, or methyl fluoropropionate. Among the above examples, the cyclic carbonic acid ester and the fluorinated carbonic acid ester including fluorine as a constitution element are particularly preferable, for example, from the viewpoints of suppressing self-discharge of the battery, and the like. Among the fluorinated carbonic acid esters in the above examples, fluoroethylene carbonate is preferable. These organic solvents may be used singly or in combination of two or more kinds thereof.

The amount of the organic solvent with respect to the lithium salt contained in the aqueous electrolyte 16 is such that the molar ratio of the lithium salt to the organic solvent is preferably in the range of greater than or equal to 1 : 0 and less than or equal to 1 : 2.5, and more preferably in the range of greater than or equal to 1 : 0 and less than or equal to 1 : 2. In a case where the amount of the organic solvent with respect to the lithium salt is within the above range, the battery characteristics of the lithium ion secondary battery may be improved as compared with the case of the organic solvent amount out of the above range.

As the lithium salt, any compound can be used as long as it can be dissolved and dissociated in an aqueous solvent to provide lithium ions in the aqueous electrolyte 16. Examples of such a lithium salt include salts with an inorganic acid such as perchloric acid, sulfuric acid, or nitric acid, salts with a halide ion such as a chloride ion or a bromide ion, and salts with an organic anion including a carbon atom in its structure.

Examples of the organic anion constituting the lithium salt include anions represented by the following general formulas (i) to (vi).

(R¹SO₂)(R²SO₂)N⁻ (i)

(R¹ and R² are each independently selected from an alkyl group or a halogen-substituted alkyl group. R¹ and R² may be bonded to each other to form a ring.)

R³SO₃⁻ (ii)

(R³ is selected from an alkyl group or a halogen-substituted alkyl group.)

R⁴CO₂⁻ (iii)

(R⁴ is selected from an alkyl group or a halogen-substituted alkyl group.)

(R⁵SO₂)₃C⁻ (iv)

(R⁵ is selected from an alkyl group or a halogen-substituted alkyl group.)

[(R⁶SO₂)N(SO₂)N(R⁷SO₂)]²⁻ (v)

(R⁶ and R⁷ are selected from an alkyl group or a halogen-substituted alkyl group.)

[(R⁸SO₂)N(CO)N(R⁹SO₂)]²⁻ (vi)

(R⁸ and R⁹ are selected from an alkyl group or a halogen-substituted alkyl group.)

In the general formulas (i) to (vi), the number of carbon atoms in the alkyl group or the halogen-substituted alkyl group is preferably 1 to 6, more preferably 1 to 3, and still more preferably 1 to 2. The halogen in the halogen-substituted alkyl group is preferably fluorine. The substitution number of the halogen in the halogen-substituted alkyl group is equal to or smaller than the number of hydrogen atoms in the original alkyl group.

Each of R¹ to R⁹ is, for example, a group represented by the following general formula (vii).

CₙHₐF_{b}Cl_{c}Br_{d}Iₑ (vii)

(n is an integer of greater than or equal to 1, a, b, c, d, and e are integers of greater than or equal to 0, and 2n + 1 = a + b + c + d + e is satisfied.)

Specific examples of the organic anion represented by the general formula (i) include bis(trifluoromethanesulfonyl)imide (TFSI; [N(CF₃SO₂)₂]⁻), bis(perfluoroethanesulfonyl)imide (BETI; [N(C₂F₅SO₂)₂]⁻), and (perfluoroethanesulfonyl)(trifluoromethanesulfonyl)imide ([N(C₂F₅SO₂)(CF₃SO₂)]⁻). Specific examples of the organic anion represented by the general formula (ii) include CF₃SO₃⁻ and C₂F₅SO₃⁻. Specific examples of the organic anion represented by the general formula (iii) include CF₃CO₂⁻ and C₂F₅CO₂⁻. Specific examples of the organic anion represented by the general formula (iv) include tris(trifluoromethanesulfonyl)carbon acid ([(CF₃SO2)₃C]⁻) and tris(perfluoroethanesulfonyl)carbon acid ([(C₂F₅SO₂)₃C]⁻). Specific examples of the organic anion represented by the general formula (v) include sulfonyl bis(trifluoromethanesulfonyl)imide ([(CF₃SO₂)N(SO₂)N(CF₃SO₂)]²⁻), sulfonyl bis(perfluoroethanesulfonyl)imide ([(C₂F₅SO₂)N(SO₂)N(C₂F₅SO₂)]²⁻), and sulfonyl (perfluoroethanesulfonyl)(trifluoromethanesulfonyl)imide ([(C₂F₅SO₂)N(SO₂)N(CF₃SO₂)]²⁻). Specific examples of the organic anion represented by the general formula (vi) include carbonyl bis(trifluoromethanesulfonyl)imide ([(CF₃SO₂)N(CO)N(CF₃SO₂)]²⁻), carbonyl bis(perfluoroethanesulfonyl)imide ([(C₂F₅SO₂)N(CO)N(C₂F₅SO₂)]²⁻), and carbonyl (perfluoroethanesulfonyl)(trifluoromethanesulfonyl)imide ([(C₂F₅SO₂)N(CO)N(CF₃SO₂)]²).

Examples of organic anions other than the organic anions of the general formulas (i) to (vi) include anions such as bis(1,2-benzenediolate(2-)-O,O')borate, bis(2,3-naphthalenediolate(2-)-O,O')borate, bis(2,2'-biphenyldiolate(2-)-O,O')borate, and bis(5-fluoro-2-ol ate-1-b enzene sulfonate-O, O')b orate.

The anion constituting the lithium salt is preferably an imide anion. Preferred specific examples of the imide anion include, in addition to the imide anions exemplified as the organic anions represented by the general formula (i), bis(fluorosulfonyl)imide (FSI; [N(FSO₂)₂]⁻) and (fluorosulfonyl)(trifluoromethanesulfonyl)imide (FTI; [N(FSO₂)(CF₃SO₂)]⁻).

The lithium salt having a lithium ion and an imide anion is, for example, preferably lithium bis(trifluoromethanesulfonyl)imide (LiTFSI), lithium bis(perfluoroethanesulfonyl)imide (LiBETI), lithium (perfluoroethanesulfonyl)(trifluoromethanesulfonyl)imide, lithium bis(fluorosulfonyl)imide (LiFSI), or lithium (fluorosulfonyl)(trifluoromethanesulfonyl)imide (LiFTI), and more preferably lithium bis(trifluoromethanesulfonyl)imide (LiTFSI), from the viewpoint of, for example, effectively suppressing self-discharge of the battery. These lithium salts may be used singly or in combination of two or more kinds thereof.

Specific examples of other lithium salts include CF₃SO₃Li, C₂F₅SO₃Li, CF₃CO₂Li, C₂F₅CO₂Li, (CF₃SO₂)₃CLi, (C₂F₅SO₂)₃CLi, (C₂F₅SO₂)₂(CF₃SO₂)CLi, (C₂F₅SO₂)(CF₃SO₂)₂CLi, [(CF₃SO₂)N(SO₂)N(CF₃SO₂)]Li₂, [(C₂F₅SO₂)N(SO₂)N(C₂F₅SO₂)]Li₂, [(C₂F₅SO₂)N(SO₂)N(CF₃SO₂)]Li₂, [(CF₃SO₂)N(CO)N(CF₃SO₂)]Li₂, [(C₂F₅SO₂)N(CO)N(C₂F₅SO₂)]Li₂, [(C₂F₅SO₂)N(CO)N(CF₃SO₂)]Li₂, lithium bis(1,2-benzenediolate(2-)-O,O')borate, lithium bis(2,3-naphthalenediolate(2-)-O,O')borate, lithium bis(2,2'-biphenyldiolate(2-)-O,O')borate, lithium bis(5-fluoro-2-olate-1-benzenesulfonate-O,O')borate, lithium perchlorate (LiClO₄), lithium chloride (LiCl), lithium bromide (LiBr), lithium hydroxide (LiOH), lithium nitrate (LiNO₃), lithium sulfate (Li2SO₄), lithium sulfide (Li₂S), and lithium hydroxide (LiOH). These may be used singly or in combination of two or more kinds thereof.

The lithium salt contained in the aqueous electrolyte 16 preferably contains a lithium ion and an imide anion, and the concentration of the lithium salt in the aqueous electrolyte is preferably greater than or equal to 4.5 mol/L and less than or equal to 6 mol/L, for example, from the viewpoint of improving the battery characteristics of the lithium ion secondary battery.

Examples of the matrix polymer contained in a case where the aqueous electrolyte 16 is an aqueous solid electrolyte include polyvinylidene fluoride-hexafluoropropylene (PVDF-HFP), polyacrylonitrile (PAN), polyvinyl alcohol (PVA), polytetrafluoroethylene (PTFE), polyethylene oxide (PEO), and polymethyl methacrylate (PMMA). Examples of the matrix polymer may further include polymers obtained by mixing acrylonitrile and acrylic acid as monomers and thermally polymerizing the mixture.

The content of the matrix polymer is, for example, preferably greater than or equal to 1 mass% and less than or equal to 15.0 mass%, and more preferably greater than or equal to 3 mass% and less than or equal to 10 mass% based on the total amount of the aqueous electrolyte 16. Within the above range, for example, the aqueous electrolyte 16 easily gels or solidifies.

In a case where the aqueous electrolyte 16 is an aqueous solid electrolyte, the aqueous electrolyte 16 may coat the entire positive electrode 10, or may coat at least the positive electrode mixture layer 28. The aqueous solid electrolyte is obtained by, for example, dissolving a lithium salt in an aqueous solvent, further mixing or dissolving a matrix polymer to obtain a precursor solution, applying the precursor solution to the positive electrode 10 or immersing the positive electrode 10 in the precursor solution to coat the positive electrode 10 with the precursor solution, and then drying the resulting product. In a case where the aqueous electrolyte 16 is an aqueous liquid electrolyte, the entire positive electrode 10 may be immersed in the aqueous liquid electrolyte, but it is sufficient that only the positive electrode mixture layer 28 is impregnated with the aqueous liquid electrolyte.

### <Non-Aqueous Electrolyte>

The non-aqueous electrolyte contained in the separator 18 disposed between the negative electrode 12 and the partition layer 14 contains a lithium salt. The non-aqueous electrolyte containing a lithium salt is, for example, a non-aqueous liquid electrolyte including a lithium salt and an organic solvent, or a non-aqueous solid electrolyte in which a lithium salt, an organic solvent, and a matrix polymer are combined. The non-aqueous solid electrolyte is prepared by, for example, dissolving a lithium salt in an organic solvent, further mixing or dissolving a matrix polymer to obtain a precursor solution, and heating and drying the precursor solution. For example, when the non-aqueous solid electrolyte is contained in the separator 18, for example, the separator 18 may be impregnated with the precursor solution and then heated and dried. The non-aqueous electrolyte may be a liquid or solid, and is preferably a non-aqueous liquid electrolyte from the viewpoint of further improving the battery characteristics. When the non-aqueous liquid electrolyte is contained in the separator 18, for example, the separator 18 may be immersed in the non-aqueous liquid electrolyte.

Examples of the organic solvent include known organic solvents used in conventional non-aqueous secondary batteries, such as esters, ethers, nitriles, alcohols, ketones, amines, amides, sulfur compounds, and hydrocarbons described above. Among these organic solvents, esters, ethers, nitriles, amides, mixed solvents of two or more thereof, and the like are preferably used from the viewpoint of, for example, improving battery characteristics.

Examples of the esters include cyclic carbonic acid esters such as ethylene carbonate, propylene carbonate, and butylene carbonate, chain carbonic acid esters such as dimethyl carbonate, methyl ethyl carbonate, diethyl carbonate, methyl propyl carbonate, ethyl propyl carbonate, and methyl isopropyl carbonate, and carboxylic acid esters such as methyl acetate, ethyl acetate, propyl acetate, methyl propionate, ethyl propionate, and γ-butyrolactone.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, and crown ethers, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl.

The organic solvent preferably contains a halogen-substituted product in which hydrogen in the solvent described above is substituted with a halogen atom such as fluorine. The halogen-substituted solvent is particularly preferably at least one of a fluorinated cyclic carbonic acid ester, a fluorinated chain carbonic acid ester, or a fluorinated ether. Preferred examples of the fluorinated cyclic carbonic acid ester include 4-fluoroethylene carbonate, 4,5-difluoroethylene carbonate, 4,4-difluoroethylene carbonate, 4,4,5-trifluoroethylene carbonate, and 4,4,5,5-tetrafluoroethylene carbonate. Preferred examples of the fluorinated chain carbonic acid ester include ethyl 2,2,2-trifluoroacetate, methyl 3,3,3-trifluoropropionate, and methyl pentafluoropropionate. Preferred examples of the fluorinated ether include 1,1,2,2-tetrafluoroethyl 2,2,2-trifluoroethyl ether and 1,1,2,2-tetrafluoroethyl 2,2,3,3-tetrafluoropropyl ether.

The organic solvent preferably contains a cyclic organic solvent such as a cyclic carbonic acid ester, for example, from the viewpoints of suppressing deterioration of the lithium ion conductivity of the non-aqueous electrolyte, and the like.

Examples of the lithium salt include known lithium salts used in conventional non-aqueous secondary batteries, such as LiPF₆, LiBF₄, LiAsF₆, LiClO₄, LiCF₃SO₃, LiN(FSO₂)₂, LiN(ClF₂ₗ₊₁SO₂)(CₘF₂ₘ₊₁SO₂) (l and m are integers of greater than or equal to 1), LiC(CₚF₂ₚ₊₁SO₂)(C_{q}F_{2q+1}SO₂)(CᵣF₂ᵣ₊₁SO₂) (p, q, and r are integers of greater than or equal to 1), Li[B(C₂O₄)₂] (lithium bis(oxalate)borate (LiBOB)), Li[B(C₂O₄)F₂], Li[P(C₂O₄)F₄], Li[P(C₂O₄)₂F₂], and LiPO₂F₂. The lithium salt may be, for example, the above-exemplified lithium salt to be used in the aqueous electrolyte 16.

As the matrix polymer, ones similar to those in the aqueous electrolyte 16 can be used. The content of the matrix polymer is, for example, preferably greater than or equal to 1 mass% and less than or equal to 15.0 mass%, and more preferably greater than or equal to 3 mass% and less than or equal to 10 mass% based on the total amount of the non-aqueous electrolyte. Within the above range, for example, the non-aqueous electrolyte easily solidifies.

In a case where the non-aqueous electrolyte is a non-aqueous solid electrolyte, the non-aqueous electrolyte preferably has hydrophobicity so as to have a solubility of less than or equal to 2 g in 100 g of water at 25°C, for example, from the viewpoints of effectively suppressing contact between the negative electrode 12 and water, and the like. The hydrophobicity of the non-aqueous electrolyte can be enhanced by, for example, increasing the ratio of the organic solvent having a hydrophobic substituent or the fluorinated organic solvent.

The non-aqueous electrolyte may be provided between the negative electrode 12 and the partition layer 14, but since the side reaction of water also occurs on the negative electrode current collector 30 and the negative electrode lead 22, it is preferable to coat the entire negative electrode 12 with the non-aqueous solid electrolyte, and it is more preferable to coat the negative electrode lead 22 (excluding the portion protruding from the battery case 24). For example, a precursor solution obtained by dissolving a lithium salt in an organic solvent and further mixing or dissolving matrix polymers is applied to the negative electrode 12, or the negative electrode 12 to which the negative electrode lead 22 is attached is immersed in the precursor solution to coat the negative electrode 12 or the like with the precursor solution, and then the precursor solution is dried, whereby the non-aqueous solid electrolyte can be coated on the negative electrode 12 or the like.

The separator 18 may be a conventionally known separator or the like used for a lithium ion secondary battery.

### <Partition Layer 14>

The partition layer 14 contains a non-aqueous solid electrolyte A in which a matrix polymer, a lithium salt, and a hydrophobic ionic liquid are combined. The partition layer 14 transmits, for example, lithium ions, but has a function of electrically separating the positive electrode 10 and the negative electrode 12. The partition layer 14 of the present embodiment contains the hydrophobic ionic liquid to suppress water permeation, and thus movement of water from the positive electrode 10 side to the negative electrode 12 side via the partition layer 14 is suppressed. As a result, a side reaction of water on the negative electrode 12 side is suppressed, and the initial discharge capacity can be improved.

As the matrix polymer, those similar to the aqueous electrolyte 16 and the non-aqueous electrolyte described above may be used. The matrix polymer preferably contains at least one of polyvinylidene fluoride-propylene hexafluoride (PVDF-HFP), polyvinylidene fluoride (PVDF), polyacrylonitrile (PAN), polyvinyl alcohol (PVA), polytetrafluoroethylene (PTFE), polyethylene oxide (PEO), and polymethyl methacrylate (PMMA) from the viewpoint of being able to densify the non-aqueous solid electrolyte A and suppress water permeability in the partition layer 14. The content of the matrix polymer is preferably in the range of greater than or equal to 5 mass% and less than or equal to 30 mass%, and more preferably in the range of greater than or equal to 10 mass% and less than or equal to 25 mass% based on the total amount of the non-aqueous solid electrolyte A. Within the above range, for example, the denseness of the non-aqueous solid electrolyte A is improved, and water permeability in the partition layer 14 may be further suppressed. Examples of other matrix polymers include methyl methacrylate, methyl acrylate, and vinyl acetate.

The lithium salt may be any known lithium salt used for a lithium ion secondary battery, and for example, those exemplified for the non-aqueous electrolyte described above can be used.

The ionic liquid contained in the partition layer 14 is a salt that is composed of a cation and an anion and is liquid at room temperature. The ionic liquid preferably has hydrophobicity. Hydrophobic ionic liquids are ionic liquids that are sparingly soluble or insoluble in water. The hydrophobic ionic liquid preferably has a solubility of less than 1 g in 100 g of pure water at 20°C, for example.

The cation preferably has the following structure from the viewpoint of having hydrophobicity.

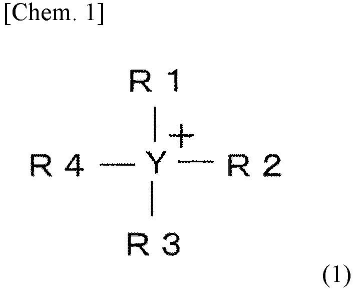

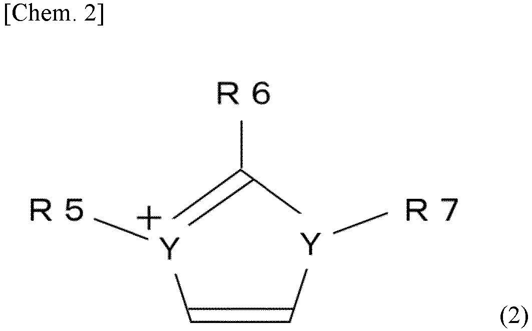

In the formula (1), Y is an N atom or a P atom, R1 to R4 are each independently an alkyl group, an ether group, an ester group, or a carbonic acid ester group, or Rn and Rn+1 (n is an integer of 1 to 3) may form a cyclic structure bonded to each other. In the formula (2), Y represents an N atom or a P atom, R5 and R7 each represent an alkyl group, an ether group, an ester group, or a carbonic acid ester group, and R6 represents hydrogen or a methyl group. The number of carbon atoms in R1 to R4, R5, and R7 is not particularly limited, but is preferably in the range of 1 to 10, and more preferably in the range of 1 to 5 from the viewpoint of exhibiting hydrophobicity. R1 to R4 and R5 to R7 in the formulae (1) and (2) are each an alkyl group, an ether group, an ester group, or a carbonic acid ester group, and may contain a halogen-substituted product obtained by substituting a hydrogen atom with a halogen atom such as fluorine, chlorine, or bromine.

Examples of the alkyl group include a methyl group, an ethyl group, a propyl group, an isopropyl group, and a butyl group. Examples of the ether group include a methoxymethyl group, a methoxyethyl group, a methoxypropyl group, an ethoxymethyl group, and an ethoxyethyl group. Examples of the ester group include a methoxycarbonylmethyl group, a methoxycarbonylethyl group, an ethoxycarbonylmethyl group, an acetylmethyl group, an acetylethyl group, and a propionylmethyl group. Examples of the carbonic acid ester group include chain -CH₂OCOOCH₃, - CH₂CH₂OCOOCH₃, -CH₂OCOOCH₂CH₃, and a carbonic acid ester group having a cyclic structure. 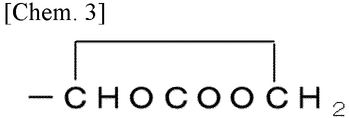 or 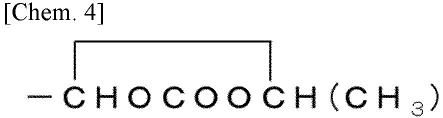 and the like.

Examples of the anion include PF₆⁻, BF₄⁻, CF₃SO₃⁻, PhSO₃⁻, [(SO₂F)₂N]⁻, [(SO₂CF₃)₂N]⁻, [PF₃(C₂F₅)₃]⁻, [PF₃(CF₃)₃]⁻, [BF₂(CF₃)₂]⁻, [BF₂(C₂F₅)₂]⁻, [BF₃(CF₃)]⁻, [BF₃(C₂F₅)]⁻, [B(COOCOO)₂]⁻, C₄F₉SO₃⁻, [(CF₃SO₂)₂N]⁻(TFSI⁻), [(C₂F₅SO₂)₂N]⁻(BETI⁻), [(CF₃SO₂)(C₄F₉SO₂)N]⁻, [(CN)₂N]⁻, [(CF₃SO₂)₃C]⁻, [(CN)₃C]⁻. One kind of them may be used, or a plurality of kinds of them may be mixed and used. Among them, PF₆⁻, BF₄⁻, CF₃SO₃⁻, PhSO₃⁻, [(SO₂F)₂N]⁻, and [(SO₂CF₃)₂N]⁻ are preferable from the viewpoint of having hydrophobicity.

Specific examples of the ionic liquid include N-methyl-N-propylpiperidinium bis(trifluoromethanesulfonyl)imide, 1-butyl-1-methylpyrrolidinium bis(trifluoromethanesulfonyl)imide, N,N,N-trimethyl-N-propylammonium bis(trifluoromethanesulfonyl)imide, N-(2-methoxyethyl)-N-methylpyrrolidinium bis(trifluoromethanesulfonyl)imide, N,N-diethyl-N-methyl-N-(2-methoxydiethyl)ammonium bis(trifluoromethanesulfonyl)imide, and trihexyltetradecylphosphonium bis(trifluoromethylsulfonyl)amide.

An example of a method for producing the non-aqueous solid electrolyte A will be described. For example, the matrix polymer is dissolved in a diluent solvent such as acetone or tetrahydrofuran by heating and stirring. A precursor solution obtained by adding a lithium salt and an ionic liquid to this solution is applied to a glass substrate, and heated and dried at a temperature of 40 to 80°C for 1 to 5 hours to evaporate the diluent solvent. As a result, a film of the non-aqueous solid electrolyte A formed on the glass substrate is obtained. The obtained film of the non-aqueous solid electrolyte A is in a gel state or a solid state. By peeling the film of the non-aqueous solid electrolyte A from the glass substrate, a partition layer containing the non-aqueous solid electrolyte A is obtained. Although the glass substrate is used in the above description, a porous sheet such as a separator may be used instead of the glass substrate. By using the porous sheet, it is possible to form a partition layer in which the porous sheet and the non-aqueous solid electrolyte A are integrated.

Specific examples of the porous sheet include fine porous thin films, woven fabrics, and nonwoven fabrics. Examples of the material of the porous sheet include olefin-based resins such as polyethylene and polypropylene, resins such as polyamides, polyamideimides, and cellulose, and glass and ceramics such as borosilicate glass, silica, alumina, and titania. The porous sheet may be a laminate including a cellulose fiber layer and a thermoplastic resin fiber layer such as an olefin-based resin. The porous sheet may be a laminate including a polyethylene layer and a polypropylene layer, and a porous sheet that has a surface to which a material such as an aramid-based resin or a ceramic is applied may be used.

The non-aqueous solid electrolyte A may be produced by, for example, a phase inversion method. Hereinafter, a production example of the non-aqueous solid electrolyte A by the phase inversion method will be described. First, a solution is obtained in which the matrix polymer is dissolved in an organic solvent. The organic solvent is desirably a solvent in which the matrix polymer is easily dissolved, and examples of the organic solvent include dimethylformamide.

The solution in which the matrix polymer is dissolved is applied to a substrate such as a glass plate or an aluminum foil. Then, a poor solvent (for example, water) is added to the applied film on the substrate to solidify the matrix polymer, and thus a polymer skeleton (that is, polymer film) is formed. Next, the polymer skeleton taken out from the substrate is immersed in a poor solvent for a predetermined time or dried by heat treatment such as vacuum heating.

The obtained polymer skeleton is immersed in an ionic liquid containing a lithium salt for a predetermined time, and dried by heating for a predetermined time. As a result, a film of the non-aqueous solid electrolyte A in which the matrix polymer composed of the polymer skeleton, the lithium salt, and the ionic liquid are combined is obtained. The obtained film of the non-aqueous solid electrolyte A is in a gel state or a solid state.

The thickness of the partition layer 14 may be, for example, in the range of greater than or equal to 10 µm and less than or equal to 50 µm, and may be in the range of greater than or equal to 15 µm and less than or equal to 30 µm.

The partition layer 14 is not limited to a partition layer containing only the non-aqueous solid electrolyte A, and may contain the non-aqueous solid electrolyte A and a non-aqueous solid electrolyte B including a component different from components of the non-aqueous solid electrolyte A. In a case where the non-aqueous solid electrolytes A and B are included, the partition layer 14 may be a single partition layer in which the non-aqueous solid electrolytes A and B are integrated, or a laminated structure in which a first partition layer containing the non-aqueous solid electrolyte A and a second partition layer containing the non-aqueous solid electrolyte B are layered.

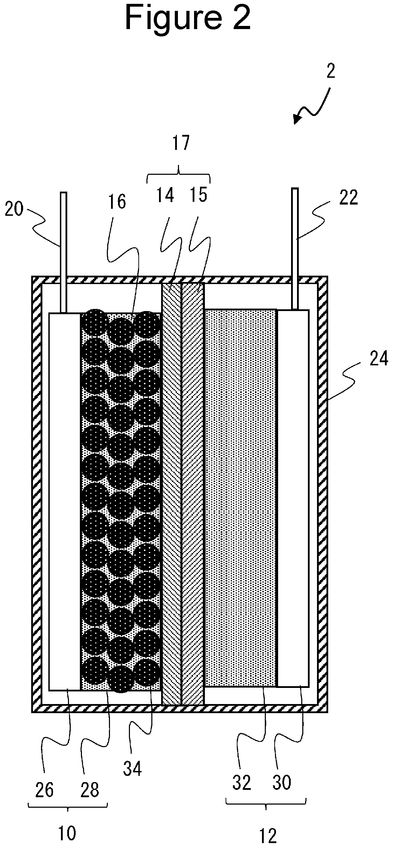

FIG. 2 is a schematic sectional view showing another example of the lithium ion secondary battery of the present embodiment. In a lithium ion secondary battery 2 shown in FIG. 2, a constituent similar to that of the lithium ion secondary battery 1 shown in FIG. 1 is denoted by the same reference sign as in FIG. 1. The lithium ion secondary battery 2 shown in FIG. 2 includes a partition layer 17 including a first partition layer 14 and a second partition layer 15 between a positive electrode 10 and a negative electrode 12.

The first partition layer 14 is a partition layer containing the non-aqueous solid electrolyte A in which a matrix polymer, a lithium salt, and a hydrophobic ionic liquid are combined, and has the same configuration as the partition layer 14 described above.

The second partition layer 15 is a partition layer containing the non-aqueous solid electrolyte B including a component different from components of the non-aqueous solid electrolyte A. The second partition layer 15 may or may not contain an ionic liquid. The second partition layer 15 is obtained, for example, by applying a precursor solution of the non-aqueous solid electrolyte B to a porous sheet such as a separator and drying the applied solution. As the precursor solution of the non-aqueous solid electrolyte B, the precursor solution described above for the non-aqueous electrolyte can be used.

The matrix polymer in the precursor solution of the non-aqueous solid electrolyte B, that is, the matrix polymer included in the non-aqueous solid electrolyte B preferably includes a fluorine-based matrix polymer, and preferably includes polyvinylidene fluoride (PVDF), for example, from the viewpoint of suppressing water permeability in the second partition layer 15.

The non-aqueous solid electrolyte B contains an organic solvent. As the organic solvent contained in the non-aqueous solid electrolyte B, the above-described examples for the non-aqueous electrolyte can be used. The non-aqueous solid electrolyte B preferably contains a cyclic organic solvent such as a cyclic carbonic acid ester, for example, from the viewpoints of suppressing deterioration of the lithium ion conductivity, and the like. The cyclic organic solvent is preferably contained in an amount of greater than or equal to 30 vol%, more preferably greater than or equal to 50 vol%, and still more preferably greater than or equal to 80 vol% based on the total volume of the organic solvent in the non-aqueous solid electrolyte B.

In the lithium ion secondary battery 2 shown in FIG. 2, the first partition layer 14 containing the non-aqueous solid electrolyte A is disposed on the positive electrode 10 side, and the second partition layer 15 containing the non-aqueous solid electrolyte B is disposed on the negative electrode 12 side. The disposition of the partition layers is not limited to the above-described disposition, and the first partition layer 14 containing the non-aqueous solid electrolyte A may be disposed on the negative electrode 12 side, and the second partition layer 15 containing the non-aqueous solid electrolyte B may be disposed on the positive electrode 10 side.

The thickness of the first partition layer 14 may be, for example, in the range of greater than or equal to 10 µm and less than or equal to 50 µm, and may be in the range of greater than or equal to 15 µm and less than or equal to 30 µm. The thickness of the second partition layer 15 may be, for example, in the range of greater than or equal to 10 µm and less than or equal to 50 µm, and may be in the range of greater than or equal to 15 µm and less than or equal to 30 µm. If the first partition layer 14 and the second partition layer 15 are too thick, for example, the battery resistance may increase and the battery performance may deteriorate. If the first partition layer 14 and the second partition layer 15 are too thin, for example, the mechanical strength may be reduced.

The partition layer 17 in which the first partition layer 14 containing the non-aqueous solid electrolyte A and the second partition layer 15 containing the non-aqueous solid electrolyte B are layered can be produced, for example, by producing the non-aqueous solid electrolytes A and B, respectively, then placing the non-aqueous solid electrolyte A on the non-aqueous solid electrolyte B, and heating (drying) the non-aqueous solid electrolyte A. In addition, the single partition layer in which the non-aqueous solid electrolytes A and B are integrated can be produced, for example, by adding a precursor solution of the non-aqueous solid electrolyte B to a precursor solution used in producing the non-aqueous solid electrolyte A, or immersing the produced non-aqueous solid electrolyte A in the precursor solution of the non-aqueous solid electrolyte B.

Although not illustrated in the drawings, a separator 18 containing the above-described non-aqueous electrolyte containing a lithium salt may be disposed between the negative electrode 12 and the partition layer 17.

Examples of the battery case 24 include metal cases, resin cases, and laminate film cases. Examples of a material of the metal cases include nickel, iron, and stainless steel. Examples of a material of the resin cases include polyethylene and polypropylene. The laminate film is, for example, a multilayer film in which a stainless foil is coated with a resin film. Examples of a material of the resin film include polypropylene, polyethylene, nylon, and polyethylene terephthalate.

The lithium ion secondary battery of the present embodiment is used in various forms having a shape such as a square, cylindrical, flat, thin, coin, or laminate shape.

### EXAMPLES

Hereinafter, the present disclosure will be further described with reference to Examples, but the present disclosure is not limited to these Examples.

### <Example 1>

### [Negative Electrode]

A Li metal plate was cut into a predetermined electrode size and used as a negative electrode.

### [Positive Electrode]

LiNi_{0.82}Co_{0.15}Al_{0.03}O₂ as a positive electrode active material, carbon black as a conductive agent, and PVDF as a binder were mixed at a mass ratio of 98 : 1 : 1, and N-methyl-2-pyrrolidone (NMP) was added to prepare a positive electrode mixture slurry. Next, the positive electrode mixture slurry was applied to a positive electrode current collector made of a Ti foil, and the applied film was dried and then rolled with a roller. The resulting product was cut into a predetermined electrode size to obtain a positive electrode. The amount of the applied positive electrode mixture slurry was 234 g/cm², and the packing density of the positive electrode mixture layer was 3.7 gcm⁻³.

### [Aqueous Liquid Electrolyte]

LiTFSI, LiBETI, and water were mixed at a molar ratio of 0.7 : 0.3 : 2.0 to prepare an aqueous liquid electrolyte in which the LiTFSI and the LiBETI were dissolved in the water.

### [First Partition Layer]

1.2 g of PVDF-HFP (polyvinylidene fluoride-propylene hexafluoride) as a matrix polymer was completely dissolved in acetone as a diluent solvent by heating and stirring at 50°C. 0.2 g of LiTFSI (lithium bis[trifluoromethanesulfonylimide]) and 0.8 g of N-(2-methoxyethyl)-N-methylpyrrolidinium bis(trifluoromethanesulfonyl)imide as an ionic liquid were added to this solution, and completely dissolved by heating and stirring at 50°C to obtain a precursor solution. This precursor solution was applied to a glass plate, heated in a thermostatic bath at 60°C for 1 hour to evaporate the diluent solvent, and the obtained transparent film-like sheet was used as the first partition layer.

### [Test Cell]

A negative electrode lead was attached to the negative electrode. In addition, a positive electrode lead was attached to the positive electrode, and the positive electrode attached with the positive electrode lead was immersed in the aqueous liquid electrolyte to obtain a positive electrode impregnated with the aqueous liquid electrolyte. An electrode assembly in which the first partition layer was disposed between the negative electrode and the positive electrode was housed in a laminate type battery case to produce a test cell.

### <Example 2>

### [Aqueous Solid Electrolyte]

LiTFSI, LiBETI, and water were mixed at a molar ratio of 0.7 : 0.3 : 2.0 to prepare an aqueous liquid electrolyte in which the LiTFSI and the LiBETI were dissolved in the water. Thereafter, 8 wt% of PVA (polyvinyl alcohol) was added while heating to 80°C, and heating was continued for 1.5 hours. The mixture was applied to the positive electrode and dried at room temperature for 30 minutes to obtain a gel-like aqueous solid electrolyte coated on the positive electrode.

A test cell was prepared in the same manner as in Example 1 except that a positive electrode coated with an aqueous solid electrolyte was used instead of immersing the positive electrode in the aqueous liquid electrolyte.

### <Example 3>

### [Second Partition Layer]

In a mixed solution obtained by mixing fluoroethylene carbonate (FEC) and methyl 3,3,3-trifluoropropionate (FMP) at a volume ratio of 9 : 1, 1 M LiTFSI was dissolved to prepare an electrolyte liquid. Next, with respect to the electrolyte liquid, 4 mass% of polymethyl methacrylate (PMMA) and 8 mass% of polyvinylidene fluoride-hexafluoropropylene (PVDF-HFP) were prepared and dissolved in a solvent obtained by mixing tetrahydrofuran (THF) in an amount 10 times that of PMMA and acetone in an amount 10 times that of PMMA. The electrolyte liquid was mixed with the resulting solution to prepare a precursor solution of a non-aqueous solid electrolyte. Then, the separator was coated with the precursor solution and then dried at 60°C for 1 hour to obtain a porous sheet coated with the non-aqueous solid electrolyte. This sheet was used as a second partition layer.

A test cell was prepared in the same manner as in Example 1 except that the positive electrode coated with the aqueous solid electrolyte used in Example 2 was used, and the positive electrode side was disposed as a first partition layer and the negative electrode side was disposed as a second partition layer between the positive electrode and the negative electrode.

### <Example 4>

A test cell was prepared in the same manner as in Example 1 except that a first partition layer was prepared using N-methyl-N-propylpiperidinium bis(trifluoromethanesulfonyl)imide as an ionic liquid.

### <Example 5>

A test cell was prepared in the same manner as in Example 1 except that a first partition layer was prepared using trihexyltetradecylphosphonium bis(trifluoromethanesulfonyl) as an ionic liquid.

### <Comparative Example 1>

A test cell was prepared in the same manner as in Example 1 except that no partition layer was disposed between the positive electrode and the negative electrode.

### <Comparative Example 2>

A test cell was prepared in the same manner as in Example 1 except that the positive electrode coated with the aqueous solid electrolyte used in Example 2 was used and the partition layer was not disposed between the positive electrode and the negative electrode.

### <Comparative Example 3>

A test cell was prepared in the same manner as in Example 1 except that only the second partition layer was disposed between the positive electrode and the negative electrode.

### <Comparative Example 4>

A test cell was prepared in the same manner as in Example 1 except that the positive electrode coated with the aqueous solid electrolyte used in Example 2 was used and only the second partition layer was disposed between the positive electrode and the negative electrode.

### [Charge-Discharge Cycle Test]

The test cell of each Example and each Comparative Example was charged at a constant current of 0.05 C to 4.3 V, charged at a constant voltage of 4.3 V to 0.02 C, and paused for 20 minutes. Then, the test cell was discharged at a constant current of 0.05 C to 3.0 V and rested for 20 minutes. This charge-discharge cycle was repeated three times, and the discharge capacity and charge-discharge efficiency at the third cycle were measured. The charge-discharge efficiency was determined by the following formula. Charge-discharge efficiency (%) = (discharge capacity at the third cycle ÷ charge capacity at the third cycle) × 100

Table 1 summarizes the discharge capacity and the charge-discharge efficiency at the third cycle in each Example and each Comparative Example. The discharge capacity in Table 1 represents the discharge capacities of other Examples and Comparative Examples as relative values with the discharge capacity of Example 2 set as 100 (used as a reference).

**[Table 1]**

| | Aqueous electrolyte | Partition layer | Discharge capacity | Charge-discharge efficiency |
|---|---|---|---|---|
| Example 1 | Liquid | First partition layer | 92 | 99% |
| Example 2 | Gel | First partition layer | 100 | 99% |
| Example 3 | Gel | First partition layer + Second partition layer | 90 | 97% |
| Comparative Example 1 | Liquid | None | 0 | 0% |
| Comparative Example 2 | Gel | None | 0 | 0% |
| Comparative Example 3 | Liquid | Second partition layer | 76 | 96% |
| Comparative Example 4 | Gel | Second partition layer | 77 | 91% |
| Example 4 | Gel | First partition layer | 90 | 99% |
| Example 5 | Gel | First partition layer | 80 | 97% |

As can be seen from Table 1, the discharge capacity of Examples 1 to 5 at the third cycle was higher than that of Comparative Examples 1 to 4. From this result, it can be said that according to Examples 1 to 5 using the partition layer containing the non-aqueous solid electrolyte in which the matrix polymer, the lithium salt, and the hydrophobic ionic liquid are combined, the initial discharge capacity of the lithium ion secondary battery using the aqueous electrolyte can be improved.

### REFERENCE SIGNS LIST

- 1, 2: Lithium ion secondary battery
- 10: Positive electrode
- 12: Negative electrode
- 14: Partition layer or first partition layer
- 15: Second partition layer
- 16: Aqueous electrolyte
- 17: Partition layer
- 18: Separator
- 20: Positive electrode lead
- 22: Negative electrode lead
- 24: Battery case
- 26: Positive electrode current collector
- 28: Positive electrode mixture layer
- 30: Negative electrode current collector
- 32: Negative electrode mixture layer
- 34: Positive electrode active material

## Claims

1. A lithium ion secondary battery comprising: a negative electrode; a positive electrode; an aqueous electrolyte containing a lithium salt; and a partition layer disposed between the negative electrode and the positive electrode, wherein
the aqueous electrolyte is in contact with only the positive electrode out of the negative electrode and the positive electrode, and
the partition layer contains a non-aqueous solid electrolyte A wherein a matrix polymer, a lithium salt, and a hydrophobic ionic liquid are combined.

2. The lithium ion secondary battery according to claim 1, wherein a non-aqueous electrolyte containing a lithium salt is present between the partition layer and the negative electrode.

3. The lithium ion secondary battery according to claim 1 or 2, wherein the ionic liquid has at least one anion of PF₆⁻, BF₄⁻, CF₃SO₃⁻, [(SO₂F)₂N]⁻, and [(SO₂CF₃)₂N]⁻, and PhSO₃⁻.

4. The lithium ion secondary battery according to any one of claims 1 to 3, wherein the ionic liquid has a cation represented by the following formula (1): 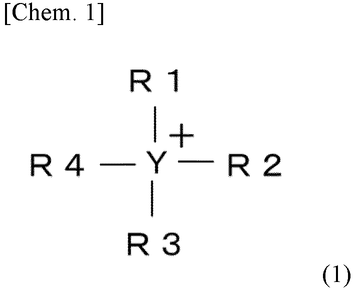 (wherein Y is an N atom or a P atom, R1 to R4 are each independently an alkyl group, an ether group, an ester group, or a carbonic acid ester group, or Rn and Rn+1 (n is an integer of 1 to 3) may form a cyclic structure bonded to each other).

5. The lithium ion secondary battery according to any one of claims 1 to 4, wherein the matrix polymers of the non-aqueous solid electrolyte A include at least one selected from polyvinylidene fluoride-propylene hexafluoride (PVDF-HFP), polyvinylidene fluoride (PVDF), polyacrylonitrile (PAN), polyvinyl alcohol (PVA), polytetrafluoroethylene (PTFE), polyethylene oxide (PEO), and polymethyl methacrylate (PMMA).

6. The lithium ion secondary battery according to claim 5, wherein the partition layer includes a non-aqueous solid electrolyte B including a component different from components of the non-aqueous solid electrolyte A.

7. The lithium ion secondary battery according to claim 6, wherein the non-aqueous solid electrolyte B contains polyvinylidene fluoride (PVDF).

8. The lithium ion secondary battery according to any one of claims 1 to 7, wherein
the negative electrode contains a negative electrode active material, and
the negative electrode active material contains at least any one of a carbon material, Si, Sn or Li metal, a Li-containing alloy, or a Li-containing metal oxide.

9. The lithium ion secondary battery according to any one of claims 1 to 8, wherein
the positive electrode contains a positive electrode active material, and
the positive electrode active material contains at least any one of a lithium-containing transition metal oxide containing at least any one element of Ni, Co, Mn, or Al, a Li-rich transition metal oxide, or a lithium-containing transition metal halogen oxide.
